Europäisches Patentamt

European Patent Office

Office européen des brevets

(11) Veröffentlichungsnummer: **0 173 165**
A2

# (12) EUROPÄISCHE PATENTANMELDUNG

(21) Anmeldenummer: 85110159.2

(22) Anmeldetag: 13.08.85

(51) Int. Cl.⁴: **H 02 H 9/04,** H 02 H 3/16

(30) Priorität: 27.08.84 DE 3431463

(43) Veröffentlichungstag der Anmeldung: 05.03.86
Patentblatt 86/10

(84) Benannte Vertragsstaaten: AT CH DE LI

(71) Anmelder: **Siemens Aktiengesellschaft, Berlin und München Wittelsbacherplatz 2, D-8000 München 2 (DE)**

(72) Erfinder: **Solleder, Reinhard, Maxstrasse 6, D-8411 Hainsacker (DE)**

(54) Elektrische Installationsanlage mit Überspannungsschutz.

㊙ Elektrische Installationsanlage zur Speisung von Verbrauchern (1), insbesondere mit elektronischen Bauteilen, aus einem Netz, die durch Fehlerstromschutzschalter (2) und in einem Nebenzweig an Erde angeschlossene Überspannungsableiter (3) ohne eigene Abschaltvorrichtung geschützt sind, wobei der Fehlerstromschutzschalter netzseitig vor einem zugeordneten Überspannungsableiter angeordnet ist und auf diesen hinsichtlich einer Zeitverzögerung von 10 ms und verträglicher Stoßströme von mindestens 5 kA, 8/20 μs Impuls – abgestimmt ist. Erfindungsgemäß ist vorgesehen, daß jeweils der Fehlerstromschutzschalter (2) für eine Stoßstromfestigkeit bis maximal 30 kA ausgelegt ist und in etwa der Beziehung genügt:

Stoßstromfestigkeit des Fehlerstromschutzschalters ist gleich Anzahl der Überspannungsableiter (3) gegen Erde, multipliziert mit 5 kA.

Siemens Aktiengesellschaft  - 1 -   Unser Zeichen
Berlin und München               VPA 84 P 3 3 4 8 E

Elektrische Installationsanlage mit Überspannungsschutz

Die Erfindung bezieht sich auf eine elektrische Installationsanlage zur Speisung von Verbrauchern, insbesondere mit elektronischen Bauteilen, aus einem Netz, im einzelnen nach Oberbegriff des Patentanspruchs. Für eine solche Installationsanlage ist eine Geräteanordnung zum Netzanschluß bekannt (DE-PS 30 29 453).

Überspannungen, hervorgerufen durch Gewitter oder Schaltvorgänge, können elektrische Niederspannungsanlagen schädigen, indem sie Isolationen zerstören, Fehlerstromschutzschalter zum unerwünschten Auslösen bringen oder elektronische Bauteile schädigen. Solche Bauteile werden bereits durch die Auswirkung entfernter Blitzeinschläge beeinflußt oder zerstört.

Bisher wurde Überspannungsschutz im wesentlichen durch Einsatz von Überspannungsableitern im Netz des Energieversorgungsunternehmens zu lösen versucht. Mit der eingangs erwähnten Geräteanordnung zum Netzanschluß (DE-PS 30 29 453) soll ein Überspannungsschutz andererseits dadurch erreicht werden, daß Überspannungsableitern in einem Nebenzweig zu den Verbrauchern ein Fehlerstromschutzschalter in besonderer Weise zugeordnet wird, der funktionell auf die Überspannungsableiter abgestimmt ist. Vom Netz her gesehen ist der Fehlerstromschutzschalter dabei vor den Überspannungsableitern angeordnet. Der Fehlerstromschutzschalter soll bei abzuleitenden Stoßströmen von mindestens 5 kA bei einem Stoßimpuls 8/20µs nicht auslösen. Außerdem soll der Fehlerstromschutzschalter erst

No 2 Rat / 20.08.1984

bei längeren Belastungen als 10 ms, bezogen auf 50 Hz Netzfrequenz, auslösen. Bei der bekannten Geräteanordnung wird eine bauliche Einheit aus Fehlerstromschutzschalter und Überspannungsableitern angestrebt.

Bei der geschilderten bekannten Geräteanordnung wird die Festigkeit des Fehlerstromschutzschalters gegen Stoßströme sachlich so verstanden, daß der Fehlstromschutzschalter bei Stoßströmen von etwa 5 kA, wie sie übliche Überspannungsableiter gemäß den einschlägigen Bestimmungen ableiten können, nicht auslösen soll. Unnötiges Auslösen eines Fehlerstromschutzschalters führt in der Regel zu Unannehmlichkeiten oder auch zu Schäden, beispielsweise durch verdorbene Waren in Gefriergeräten.

Der Erfindung liegt die Erkenntnis zugrunde, daß die zur bekannten Geräteanordnung angegebenen Kriterien die beabsichtigte Zielsetzung nicht ausreichend sicher erfüllen.

Der Erfindung liegt die Aufgabe zugrunde, die bekannte Geräteanordnung durch eine Installationsanlage weiterzuentwickeln, mit der noch höhere Sicherheit erzielt wird.

Die Lösung der geschilderten Aufgabe besteht nach der Erfindung darin, daß jeweils der Fehlerstromschutzschalter für eine Stoßstromfestigkeit bis maximal 30 kA ausgelegt ist und in etwa der Beziehung genügt: Stoßstromfestigkeit des Fehlerstromschutzschalters ist gleich Anzahl der Überspannungsableiter gegen Erde, multipliziert mit 5 kA.

Bei Blitzeinschlägen in Niederspannungsanlagen treten die Überspannungen gegen Erde nicht nur in einem Außenleiter auf, sondern es können gleichzeitig alle Außenleiter und besonders auch der Neutralleiter davon betroffen sein. Dabei sprechen alle gegen Erde geschalteten Überspannungsableiter gleichzeitig an und es kann die Summe der Stoßströme gegen Erde abfließen. In der erfindungsgemäßen Installationsanlage kann der vorgeschaltete Fehlerstromschutzschalter auch die Summe der Stoßströme ohne Fehlauslösung ableiten. Andererseits bleibt der Vorteil erhalten, daß bei einem Defekt der Überspannungsableiter der vorgeschaltete Fehlerstromschutzschalter abschaltet und größere Schäden verhütet.

Die erfindungsgemäße Installationsanlage wird mit einem Fehlerstromschutzschalter der erforderlichen Stoßstromfestigkeit und nicht nur mit einer pauschalen Mindestfestigkeit bereitgestellt.

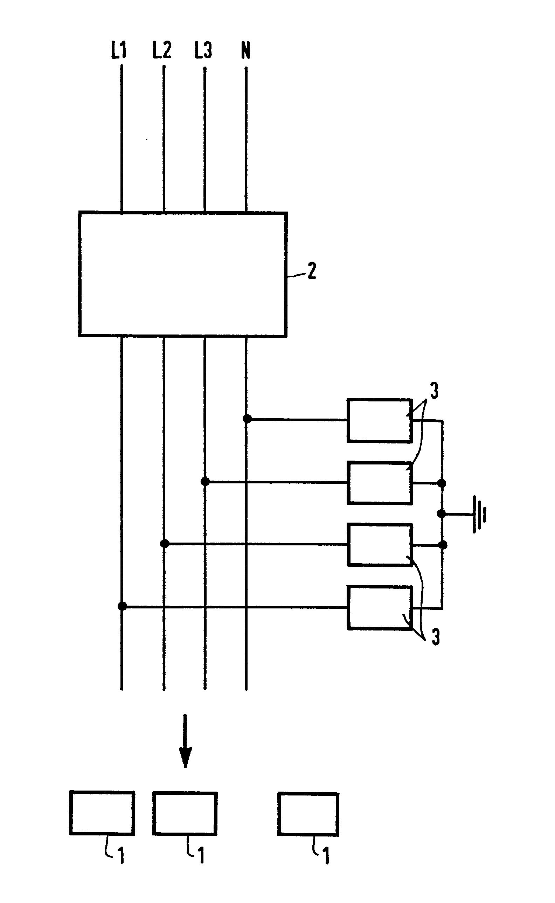

Die Erfindung soll anhand eines in der Zeichnung grob schematisch wiedergegebenen Ausführungsbeispiels näher erläutert werden:

Die elektrische Installationsanlage zur Speisung von Verbrauchern 1 weist im Ausführungsbeispiel die Außenleiter L1, L2 und L3 sowie einen Neutralleiter N bzw. einen Leiter gemäß PEN bzw. PE auf. Die Verbraucher sind durch einen Fehlerstromschutzschalter 2 und durch in einem Nebenzweig an Erde angeschlossene Überspannungsableiter 3 geschützt. Die Überspannungsableiter weisen keine eigene Abschaltvorrichtung auf, sondern bei einem sich als Kurzschluß auswirkenden Defekt sind sie durch den vorgeschalteten Fehlerstromschutzschalter 2 ihrerseits geschützt.

Um einerseits die Verbraucher 1 durch den Fehlerstromschutzschalter 2 gemäß der Funktionsweise eines Fehlerstromschutzschalters zu schützen und um andererseits auch bei einem Überspannungsschutz eine zielgerechte Betriebsweise sicherzustellen, weist der Fehlerstromschutzschalter eine Zeitverzögerung von 10 ms auf, das heißt, daß er erst bei länger anstehenden Auslösesignalen anspricht. Er weist weiter für Impulse der Form 8/20µs eine Stoßstromfestigkeit zwischen 5 kA und 30 kA und zwar in der besonderen Größenordnung auf, wie sie in etwa der Beziehung genügt: Stoßstromfestigkeit des Fehlerstromschutzschalters ist gleich Anzahl der Überspannungsableiter gegen Erde, multipliziert mit 5 kA.

Im Ausführungsbeispiel weist der Fehlerstromschutzschalter 2 daher bei vier Überspannungsableitern eine Stoßstromfestigkeit von 20 kA auf.

1 Patentanspruch
1 Figur

Patentanspruch

1. Elektrische Installationsanlage zur Speisung von Verbrauchern (1), insbesondere mit elektronischen Bauteilen, aus einem Netz, die durch Fehlerstromschutzschalter (2) und in einem Nebenzweig an Erde angeschlossene Überspannungsableiter (3) ohne eigene Abschaltvorrichtung geschützt sind, wobei der Fehlerstromschutzschalter netzseitig vor einem zugeordneten Überspannungsableiter angeordnet ist und auf diesen hinsichtlich einer Zeitverzögerung von 10 ms und verträglicher Stoßströme von mindestens 5 kA, 8/20 µs Impuls - abgestimmt ist, d a - d u r c h  g e k e n n z e i c h n e t, daß jeweils der Fehlerstromschutzschaler (2) für eine Stoßstromfestigkeit bis maximal 30 kA ausgelegt ist und in etwa der Beziehung genügt:
Stoßstromfestigkeit des Fehlerstromschutzschalters ist gleich Anzahl der Überspannungsableiter (3) gegen Erde, multipliziert mit 5 kA.

1/1

0173165